Europäisches Patentamt

European Patent Office

Office européen des brevets

(11) Veröffentlichungsnummer: **0 301 225**
**A1**

(12) **EUROPÄISCHE PATENTANMELDUNG**

(21) Anmeldenummer: **88109731.5**

(22) Anmeldetag: **18.06.88**

(51) Int. Cl.⁴: **B62D 61/12 , B60G 17/04**

(30) Priorität: **25.07.87 DE 3724696**

(43) Veröffentlichungstag der Anmeldung:
**01.02.89 Patentblatt 89/05**

(84) Benannte Vertragsstaaten:
**DE FR IT NL SE**

(71) Anmelder: **ROBERT BOSCH GMBH**
**Postfach 50**
**D-7000 Stuttgart 1(DE)**

(72) Erfinder: **Pischke, Jürgen, Dipl.-Phys.**
**Bahnhofstr 8**
**D-7251 Weissach(DE)**
Erfinder: **Tillhon, Engelbert, Dipl.-Ing.**
**Reisweg 42**
**D-7128 Lauffen(DE)**

(54) **Verfahren zur Regelung einer druckluftgestützten Fahrzeugfederung.**

(57) Verfahren zur Regelung einer druckluftgestützten Fahrzeugfederung für ein Fahrzeug mit wenigstens einer Treibachse und einer nicht angetriebenen Nachlaufachse, mittels dessen das Niveau des Fahrzeugaufbaus und die Luftdrücke $p_T$, $p_N$ in den Luftfedern von Treibachse und Nachlaufachse regelbar sind. Die an der einzelnen Achse wirkende Achsbelastung wird so eingestellt, daß bei einer geringen Beladung nahezu die gesamte Belastung von der Treibachse übernommen wird und erst bei Erreichen eines maximalen Luftdrucks $p_{T\ max}$ an der Treibachse eine zusätzliche Belastung von der Nachlaufachse übernommen wird. Erst nach Erreichen eines maximal zulässigen Druckes $p_{N\ max}$ an der Nachlaufachse wird ein zusätzlicher Lastanteil auch über $p_{T\ max}$ hinaus wiederum von der Treibachse übernommen. Vorgeschlagen wird ein Verfahren zur Regelung der Be- und Entlüftung der Luftfedern mit minimalem Luftverbrauch.

FIG. 2

## Verfahren zur Regelung einer druckluftgestützten Fahrzeugfederung

Stand der Tehcnik

Die Erfindung geht aus von einer druckluftgestützten Fahrzeugfederung nach der Gattung des Anspruchs.

Es ist bereits eine Fahrzeugfederung für Fahrzeuge mit zwei Hinterachsen bekannt, bei der die Lastverteilung auf die beiden Hinterachsen so durchgeführt wird, daß immer der höchste mögliche Lastanteil von der Antriebsachse übernommen wird, während die nicht angetriebene Nachlaufachse nur den darüber hinausgehenden Lastanteil zugewiesen bekommt. Auf diese Weise wird die Traktion des Fahrzeugs optimiert. Die Be- und Entlüftung der Luftfedern von Treibachse und Nachlaufachse erfolgt dabei unabhängig voneinander in Abhängigkeit von Stellsignalen einer elektronischen Steuereinrichtung, welche über eine Soll-Ist-Vergleichseinrichtung zum Vergleich gespeicherter Druck- und Niveauwerte mit tatsächlich vorliegenden Werten verfügt. Dazu befinden sich in der bekannten Fahrzeugfederung Druckmeßeinrichtungen, welche die Luftdrücke in den Luftfedern von Treib- und Nachlaufachse erfassen sowie Niveaumeßeinrichtungen, welche das Niveau des Fahrzeugaufbaus relativ zum Fahruntergrund bzw. zur Fahrzeugachse erfassen.

Bei der bekannten Luftfederung erfolgt das Be- bzw. Entlüften der Luftfedern bis zum Erreichen einer der beiden Sollgrößen Druck bzw. Niveau, danach wird in Richtung auf das Erreichen der jeweils anderen Sollgröße geregelt. Hierbei kann sich jedoch die erste Größe wieder verstellen, so daß eine Reihe von immer kürzer verlaufenden Regelvorgängen notwendig ist, bis beide Größen ihren Sollwert erreicht haben. Dabei kann es geschehen, daß z.B. auf einen Belüftungsvorgang an der Treibachse zum Anheben des Fahrzeugniveaus ein Entlüften an der gleichen Achse folgen muß, um den geforderten Drucksollwert zu erreichen, wodurch sich eine relativ lange Regelzeit und ein hoher Luftverbrauch ergibt.

Vorteile der Erfindung

Das erfindungsgemäße Verfahren zur Regelung einer druckluftgestützten Fahrzeugfederung mit den kennzeichnenden Merkmalen des Anspruchs bietet demgegenüber den Vorteil, daß der Luftverbrauch bis zum Erreichen der geforderten Sollwerte von Druck und Niveau minimal ist, da die Regelvorgänge ausschließlich zielgerichtet ablaufen, d.h. ein Regelvorgang wird nicht durch einen darauf folgenden Regelvorgang wieder rückgängig gemacht. Dies wird durch eine zweckmäßige Wahl der Startbedingungen und der jeweils anzusteuernden Sollgrößen erreicht, die so gewählt werden, daß bei einer Regelung einer Sollgröße (Luftdruck oder Niveau) die jeweils andere Größe sich ebenfalls in Richtung auf ihren Sollwert verändert. Ein mit einem hohen Luftverbrauch einhergehendes, iteratives Be- und Entlüften wird auf diese Weise vermieden.

Zeichnung

Figur 1 der Zeichnung zeigt schematisch eine Fahrzeugfederung zur Durchführung des beanspruchten Arbeitsverfahrens, Figur 2 ein Diagramm mit den Luftdrücken $p_T$, $p_N$ in den Luftfedern der Treib- und der Nachlaufachse in Abhängigkeit vom Gesamtgewicht bzw. der Beladung auf den Hinterachsen, Figur 3 ein Diagramm mit dem Druck in den Luftfedern der Treibachse ($p_T$) über Druck in den Luftfedern der Nachlaufachse ($p_N$).

Beschreibung

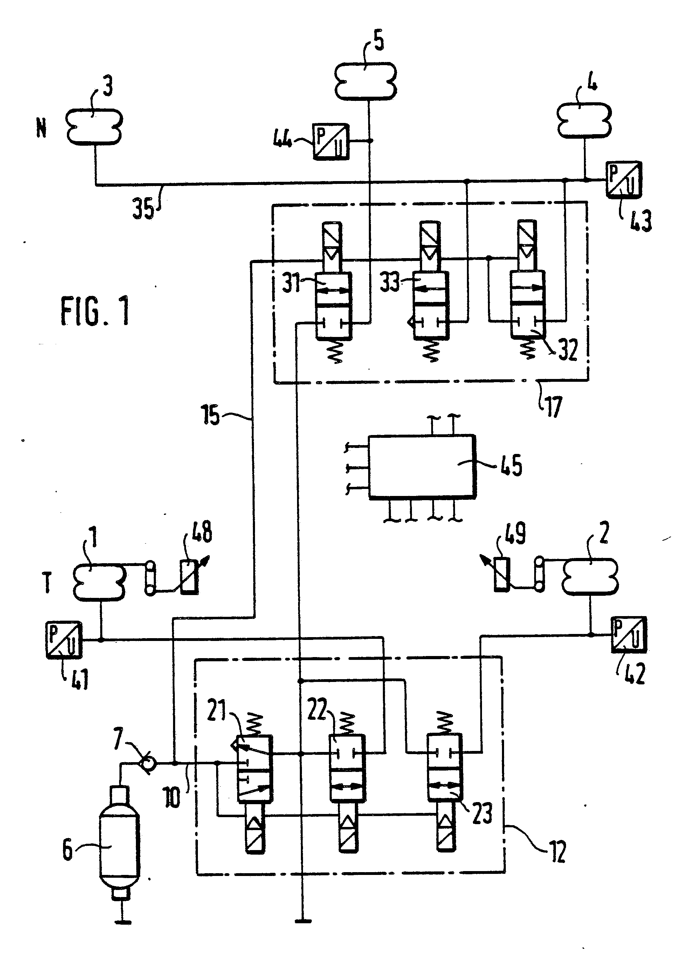

In der Figur 1 sind mit den Bezugszeichen 1 und 2 beiderseits einer Fahrzeuglängsachse angeordnete, ein federndes Luftpolster zwischen einer Treibachse (T) und einem Fahrzeugaufbau bildende Luftfedern der Greibachse bezeichnet. In Fahrtrichtung hinter den Luftfedern 1 und 2 der Treibachse befinden sich ein federndes Luftpolster zwischen einer Nachlaufachse (N) und dem Fahrzeugaufbau bildende Luftfedern 3 und 4 der Nachlaufachse. In der Zeichnung nicht dargestellt ist die Federung der Vorderachse des Fahrzeuges. Zusätzlich kann eine Hebeluftfeder 5 vorgesehen sein, welche dazu dient, die Nachlaufachse anzuheben.

Die Vorrichtung wird durch eine Druckmittelquelle 6 mit Druckluft versorgt, überschüssiger Druck kann über ein Rückschlagventil 7 abströmen. Über eine erste Druckleitung 10 wird eine Ventilanordnung 12 für die Treibachse versorgt, über eine zweite Druckleitung 15 eine Ventilanordnung 17 für die Nachlaufachse.

Die Ventilanordnung 12 für die Treibachse besteht aus drei Ventilen 21, 22 und 23:

Das Ventil 21 sperrt in seiner ersten Stellung die erste Druckleitung 10 und verbindet gleichzeitig die Ventile 22 und 23 mit der Atmosphäre. In seiner zweiten Stellung verbindet das Ventil 21 die Ventile 22 und 23 mit der Druckmittelquelle 6. Die Ventile 22 und 23 sind gleichartig und arbeiten nach Art eines Absperrventils, geben eine Verbindung also entweder frei oder nicht. Die Ventile 22 und 23 sind einerseits an das Ventil 21 angeschlossen und stehen andererseits mit den Luftfedern 1 und 2 der Treibachse in Verbindung, wobei jedes der Ventile 22 und 23 eine der Luftfedern 1 und 2 beaufschlagt.

Die Ventilanordnung 17 für die Nachlaufachse besteht ebenfalls aus drei Ventilen 31, 32, 33:

Das Ventil 31 sperrt in seiner ersten Stellung einen Durchgang und gibt diesen in seiner zweiten Stellung frei, wobei über das Ventil 31 eine Verbindung zwischen der Hebeluftfeder 5 und jener Strömungsverbindung herstellbar ist, welche die Ventile 21 und 22 bzw. 22 und 23 miteinander verbindet. Das Ventil 32 sperrt in seiner ersten Stellung und verbindet in seiner zweiten Stellung die zweite Druckleitung 15 mit den Luftfedern 3 und 4 der Nachlaufachse. Damit dient das Ventil 32 der Belüftung der Luftfedern 3 und 4 der Nachlaufachse, während die Entlüftung der Luftfedern 3 und 4 der Nachlaufachse über das Ventil 33 vorgenommen wird, indem dieses in seine zweite Stellung geschaltet wird. In dieser zweiten Stellung verbindet das Ventil 133 die Luftfedern 3 und 4 der Nachlaufachse mit der Atmosphäre, während in der ersten Stellung des Ventils 33 dieses sperrt. Die Luftfedern 3 und 4 der Nachlaufachse sind durch eine Verbindungsleitung 35 miteinander und mit den Ventilen 32 und 33 verbunden.

Drucksensoren 41, 42, 43 und 44 dienen zur Erfassung des Luftdrucks in jeder der Luftfedern 1 und 2 der Treibachse, in den einen nahezu gleichen Luftdruck aufweisenden Luftfedern 3 und 4 der Nachlaufachse und in der Hebeluftfeder 5. Die Drucksensoren 41, 42, 43 und 44 erzeugen ein elektrisches Signal, welches einer elektronischen Steuereinrichtung 45 zugeführt wird. Zur elektronischen Steuereinrichtung 45 gelangen außerdem Meßsignale mindestens zweier Wegsensoren 48, 49, welche entweder am Fahrzeugaufbau oder an Elementen der Treibachse angebracht sind und welche den Abstand zwischen Rad und Fahr zeugaufbau auf jeder der Fahrzeugseiten erfassen. Die elektronische Steuereinrichtung 45 bildet Ausgangssignale, über welche die Ventile 21, 22, 23, 31, 32 und 33 angesteuert werden.

Die Ventile 21, 22, 23, 31, 32 und 33 können als federbelastete, druckmittelsteuerbare Wegeventile mit je einem pneumatischen Steueranschluß, der durch einen Vorsteuermagneten betätigbar ist, ausgeführt sein. Die Vorsteuermagnete aller Ventile 21, 22, 23, 31, 32 und 33 sind über elektrische Leitungen mit der elektronischen Steuereintichtung 45 verbunden. Anstelle der vorgesteuerten Magnetventile können auch direkt gesteuerte Magnetventile verwendet werden.

Außer den bereits beschriebenen können der elektronischen Steuereinrichtung 45 nach weitere Meßgrößen zugewiesen werden, etwa die über einen Tachometer erfaßte Fahrgeschwindigkeit des Fahrzeuges.

In einem Speicher der elektronischen Steuereinrichtung 45 sind Sollwerte der Vorrichtung zur druckluftgestützten Federung gespeichert, insbesondere das Sollniveau der Fahrzeugaufbau relativ zum Fahruntergrund und die Luftdrücke in den Luftfedern 1, 2, 3, 4 und in der Hebeluftfeder 5. Eine Vergleicvhseinrichtung der elektronischen Steuereinrichtung 45 vergleicht die Sollwerte mit den Istwerten und gibt bei Abweichungen über elektrische Leitungen Schaltimpulse an die Ventile 21, 22, 23, 31, 32 und 33.

Die elektronische Steuereinrichtung 45 kann zusätzlich mit manuell betätigbaren Schaltern verbunden sein. Mit diesen Schalteinrichtungen können die Luftdrücke in den Luftfedern manuell beeinflußt werden, etwa in Rahmen einer Anfahrhilfe.

Eine Belüftung der Luftfedern 1 und 2 der Treibachse, beispielsweise zum Heben des Fahrzeugniveaus oder zur Erhöhung des Luftdrucks in den Luftfedern 1 und 2 der Treibachse, erfolgt, indem die Ventile 21, 22 und 23 auf Durchlaß geschaltet werden, so daß Druckluft aus der Druckmittelquelle 6 in die Luftfedern 1 und 2 der Treibachse gelangt. Die Luftfedern 3 und 4 der Nachlaufachse werden belüftet, indem das Ventil 32 auf Durchlaß geschaltet wird. Die Belüftung der Luftfedern 1 und 2 der Treibachse sowie der Luftfedern 3 und 4 der Nachlaufachse erfolgt dabei unabhängig voneinander, da die Belüftung über die beiden unabhängigen Druckleitungen 10 und 15 vorgenommen wird. Das Verhältnis des Drucks in den Luftfedern 1 und 2 der Treibachse zum Druck in den Luftfedern 3 und 4 der Nachlaufachse ist dabei innerhalb der elektronischen Steuereinrichtung 45 festgelegt, wie im folgenden noch gezeigt werden wird. Angestrebt wird, die Luftfedern 1 und 2 der Treibachse so weit mit Druck zu beaufschlagen, daß die Treibachse ihre maximal zulässige Last und die Nachlaufachse die zusätzliche Last übernimmt (Traktionsoptimierung). Der Belüftungsvorgang ist beendet, wenn die Ventile 22, 23 und 32 in ihre erste, sperrende Stellung zurückgeschaltet sind. Die Ermittlung des Druckes in den Luftfedern erfolgt, wie bereits beschrieben, mittels der Drucksensoren 41, 42 und 43.

Beim Entladen des Fahrzeuges hebt sich bei abnehmender Last der Fahrzeugaufbau. Die Wegsensoren 48, 49 melden der elektronischen Steuereinrichtung 45 eine Vergrößerung des Abstandes zwischen dem Fahrzeugaufbau und der Treibachse, wodurch einn Steuervorgang ausgelöst wird, der den vorgegebenen Normalabstand zwischen dem Fahrzeeugaufbau und der Treibachse wieder herstellt.

Eine Entlüftung der Luftfedern 1 und 2 der Treibachse, beispielsweise zum Senken des Fahrzeugniveaus oder zur Minderung des Luftdrucks in den Luftfedern 1 und 2 der Treibachse, erfolgt, indem das Ventil 21 in die zur Atmosphäre hin öffnende, erste Stellung und die Ventile 22 und 23 auf Durchsatz geschaltet werden, so daß die Luftfedern 1 und 2 der Treibachse zur Atmosphäre hin entlüftet werden. Wird das Ventil 33 auf Durchlaß geschaltet, so werden die Luftfedern 3 und 4 der NAchlaufachse in die Atmosphäre entlüftet. Auch der Vorgang des Entlüftens der Luftfedern 1 und 2 oder 3 und 4 wird durch die Drucksensoren 41, 42 und 43 überwacht und der elektronischen Steuereinrichtung 45 in Form von elektrischen Signalen gemeldet.

Die bereits beschriebene Steuerung des Be- und Entlüftens der Luftfedern 1, 2, 3 und 4 kann ebenfalls durch Betätigung der Hebelluftfeder 5 ausgelöst werden. Denn eine Belüftung der die Nachlaufachse als Ganzes anhebenden Hebelluftfeder 5 über das auf Durchlaß geschaltete Ventil 31 bewirkt eine Entlastung der Luftfedern 3 und 4 der Nachlaufachse und damit gleichzeitig eine Belastung der Luftfedern 1 und 2 der Treibachse. Ein Belüften der Hebelluftfeder 5 wird also zu einem Absinken des Fahrzeugaufbaus führen, was durch eine Belüftung der Luftfedern kompensiert werden muß. Da im umgekehrten Falle ein Entlüften der Hebelluftfeder 5 über das auf Durchlaß geschaltete Ventil 31 und das Ventil 21 zu einem Druckanstieg in den Luftfedern 3 und 4 der Nachlaufachse und zu einem Anheben des Fahrzeugaufbaus führt, muß dies durch ein Entlüften der Luftfedern kompensiert werden.

Bei einer einseitigen Be- oder Entladung des Fahrzeuges zeigen die Wegsensoren 48 und 49 für jede Fahrzeugseite ein unterschiedliches Niveau an. Auch können Drucksensoren 41 und 42 unterschiedliche Drücke in den Luftfedern 1 und 2 der Treibachse einer jeden Fahrzeugseite signalisieren. Die Ventile 22 und 23 werden dann unterschiedlich beaufschlagt, wodurch der Fahrzeugaufbau wieder in eine achsparallele Lage geschwenkt wird.

Bei Bedarf, z.B. als Anfahrhilfe auf schlechtem Fahruntergrund, kann bei entsprechender Belastung des Fahrzeuges die Achslast der Treibachse erhöht werden. Hierzu werden, beispielsweise ausgelöst durch die Handbetätigung eines Schalters, die Luftfedern 1 und 2 der Treibachse belüftet und die Luftfedern 3 und 4 der Nachlaufachse entlüftet. Normalerweise bleibt die Hebelluftfeder 5 an diesem Vorgang umbeteiligt. Erst wenn eine stärkere Erhöhung der Achslast der Treibachse gewünscht wird, kann dies durch ein Anheben der Nachlaufachse mittels der Hebelluftfeder 5 erfolgen. Das Anheben der Nachlaufachse durch die Hebelluftfeder 5 kann jedoch nur erfolgen, wenn der Druck in den Luftfedern 3 und 4 der Nachlaufachse gleich oder kleiner als ein vorgegebener Restdruck ist und wenn durch das Anheben der Nachlaufachse der vorgegebene maximal zulässige Luftdruck $p_{T max}$ in den Luftfedern 1 und 2 der Treibachse nicht überschritten wird bzw. wenn sichergestellt ist, daß der Luftdruck $p_{T max}$ allenfalls befristet überschritten wird.

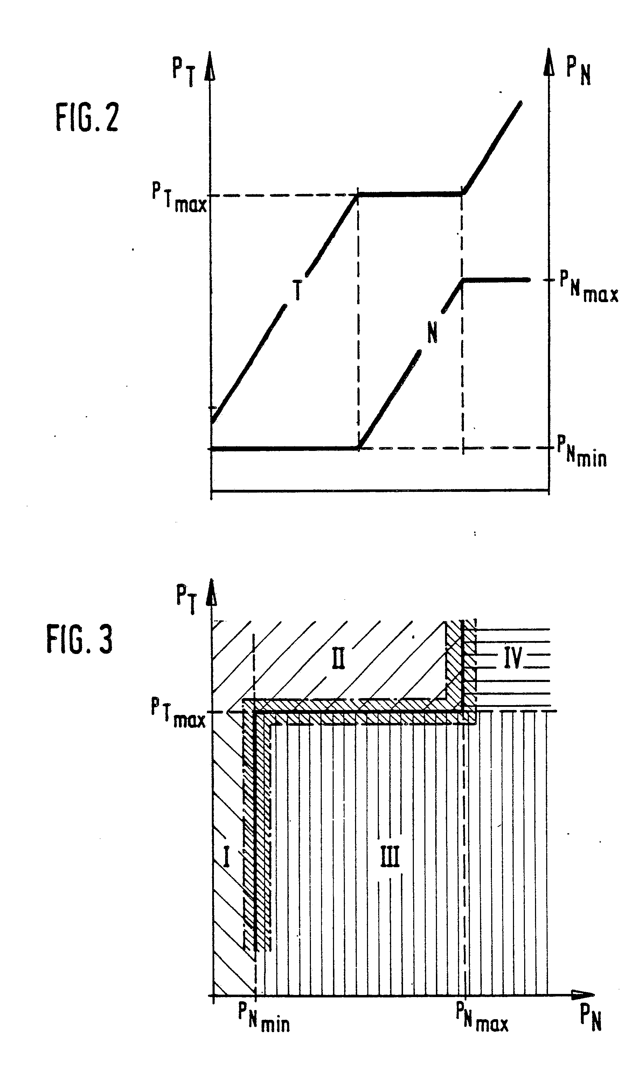

In Figur 2 ist in Form eines Diagramms dargestellt, wie die Sollwerte der Luftdrücke $p_T$ in den Luftfedern der Treibachse (T) und der Nachlaufachse (N) in Abhängigkeit von der Beladung des Fahrzeugs festgelegt sind. Bei einer geringen Gemsamtbelastung des Fahrzeuges sind die Luftfedern der Nachlaufachse so weit be- bzw. entlüftet, daß in ihnen nur ein Restdruck $p_{N min}$ aufrechterhalten wird. Auf diese Weise ist ein stabiles Laufverhalten der Räder dieser Achse sichergestellt. Der größte Teil der Beladung wird von der Treibachse übernommen, so daß diese mit einem großen Anpreßdruck arbeitet und entsprechend gute Traktionswerte aufweist. Wird die Beladung des Fahrzeuges so weit erhöht, daß ein Höchstdruck $p_{T max}$ in den Luftfedern der Treibachse erreicht ist, so wird ein zusätzlicher Lastanteil der Nachlaufachse zugewiesen. Ist aus dieser Lastanteil so groß, daß ein höchster, zulässiger Druck $p_{N max}$ in den Luftfedern der Nachlaufachse erreicht ist, so wird bei weiter zunehmender Beladung die Treibachse, auch über $p_{T max}$ hinaus, belastet, da die Treibachse zumeist mechanisch höher belastbar ist als die Nachlaufachse.

Figur 3 zeigt den gleichen Sollwertverlauf des Druckes in einer anderen Darstellung. Auf der Ordinate ist der Luftdruck in den Luft federn der Treibachse, auf der Abszisse der Luftdruck in den Luftfedern der Nachlaufachse aufgetragen. Wie man sieht, wird bis zum Erreichen eines Druckes $p_{T max}$ in den Luftfedern der Treibachse der Minimaldruck $p_{N min}$ in den Luftfedern der Nachlaufachse aufrechterhalten, eine des hinausgehende Beladung dann der Nachlaufachse his zum Erreichen von $p_{N max}$ zugewiesen und eine noch darüber hinausgehende zusätzliche Beladung wiederum von der Treibachse übernommen.

Nach Abschluß eines gesamten Regelungsvorganges entsprechen die Luftdruckwerte für die Treib- und die Nachlaufachse den in Figur 3 als durchgezogene Linie dargestellten Sollwerten, welche allerdings auch innerhalb eines sich beiderseits der durchgezogenen Linie erstreckenden, in Figur 3 zusätzlich schraffierten Sollwertbereiches liegen können. Außerdem ist nach Abschluß des Regelvorganges der in der elektronischen Steuereinrichtung abgespeicherte Sollwert für das Niveau des Fahrzeugaufbaus erreicht. Wird das Fahrzeug aus diesem Zustand heraus be- oder entladen, so stellen sich in den Luftfedern Luftdruckwerte ein, welche außerhalb des fein schraffierten Sollwertbereiches in einem der in Figur 3 mit den Ziffern I bis IV bezeichneten Sektoren liegen. Außerdem wird durch ein Be- oder Entladen des Fahrzeuges auch das Niveau des Fahrzeugaufbaus von den vorgegebenen Sollwerten abweichen. Zur Wiederherstellung des Sollzustandes ist also sowohl eine Anpassung der geforderten Druckwerte in den Luftfedern als auch eine Anpassung der geforderten Niveauwerte notwendig. Im folgenden wird nun erläutert, wie eine solche Anpassung mit einem minimalen Verbrauch an Luftvolumen und in kurzer Zeit durchgeführt werden kann.

Entsprechen sowohl die Luftdrücke $p_T$, $p_N$ als auch das Niveau des Fahrzeugaufbaus nicht den Sollwerten, so wird, je nachdem, in welchem der Sektoren I bis IV die Istwerte der Luftdrücke liegen, der darauffolgende Regelungsschritt in der folgenden Weise vorgenommen:

Im Sektor I ist $p_N < p_{N\,min}$ und $< p_{T\,max}$. Ist das geforderte Sollniveau des Fahrzeugaufbaus unterschritten, so wird der Luftdruck $p_N$ durch Belüften der Luftfedern der Nachlaufachse geregelt; ist das geforderte Sollniveau des Fahrzeugaufbaus überschritten, so wird der Luftdruck $p_T$ durch Entlüften der Luftfedern der Treibachse geregelt. Der Regelungsschritt wird beendet, wenn entweder $p_{N\,min}$ in den Luftfedern der Nachlaufachse oder das geforderte Sollniveau des Fahrzeugaufbaus erreicht ist.

Im Sektor II ist $p_N < p_{N\,max}$ und $p_T > p_{T\,max}$. Ist das geforderte Niveau des Fahrzeugaufbaus unterschritten, so wird der Luftdruck $p_N$ durch Belüften der Luftfedern der Nachlaufachse geregelt; ist das geforderte Sollniveau des Fahrzeugaufbaus überschritten, so wird der Luftdruck $p_T$ durch Entlüften der Luftfedern der Treibachse geregelt. Der Regelungsschritt wird beendet, wenn entweder $p_{T\,max}$ in den Luftfedern der Treibachse oder das geforderte Sollniveau des Fahrzeugaufbaus erreicht ist.

Im Sektor III ist $p_N > p_{N\,min}$ und $p_T < p_{T\,max}$. Ist das geforderte Sollniveau des Fahrzeugaufbaus unterschritten, so wird der Luftdruck $p_T$ durch Belüften der Luftfedern der Treibachse geregelt; ist das geforderte Sollniveau des Fahrzeugaufbaus überschritten, so wird der Luftdruck $p_N$ durch Entlüften der Luftfedern der Nachlaufachse geregelt. Der Regelungsschritt wird beendet, wenn entweder $p_{T\,max}$ in den Luftfedern der Treibachse oder das geforderte Sollniveau des Fahrzeugaufbaus erreicht ist.

Im Sektor IV ist $p_N > p_{N\,max}$ und $p_T > p_{T\,max}$. Ist das geforderte Sollniveau des Fahrzeugaufbaus unterschritten, so wird der Luftdruck $p_T$ durch Belüften der Luftfedern der Treibachse geregelt; ist das geforderte Sollniveau des Fahrzeugaufbaus überschritten, so wird der Luftdruck $p_N$ durch Entlüften der Luftfedern der Nachlaufachse geregelt. Der Regelungsschritt wird beendet, wenn entweder $p_{N\,max}$ in den Luftfedern der Nachlaufachse oder das geforderte Sollniveau des Fahrzeugaufbaus erreicht ist.

Nach Durchführung dieses ersten Regelungsschrittes wird nur in Ausnahmefällen, d.h. zufällig, der Fall eintreten, daß sowohl die Luftdrücke $p_T$, $p_N$ als auch das Niveau des Fahrzeugaufbaus bereits den Sollwerten entspricht. In den meisten Fällen wird nach Ende des ersten Regelungsschrittes nur eine dieser Größen bereits den Sollwert aufweisen. Das Regelungsverfahren wird dann mit einem der folgenden Schritte fortgesetzt:

Wenn die Istwerte der Luftdrücke $p_T$, $p_N$ den Sollwerten entsprechen, jedoch noch nicht das Niveau des Fahrzeugaufbaues, so wird der Luftdruck $p_T$ durch Be- oder Entlüften der Luftfedern der Treibachse so lange geregelt, bis $p_T$ wieder aus dem innerhalb der Steuereinrichtung vorgegebenen Sollwertbereich (fein schraffierter Bereich in Figur 3) herausfällt; wenn jedoch die Luftdrücke $p_T$, $p_N$ noch nicht den Sollwerten entsprechen, jedoch das Niveau des Fahrzeugaufbaus den geforderten Wert aufweist, so wird der Luftdruck $p_N$ durch Be- oder Entlüften der Luftfedern der Nachlaufachse geregelt, bis das Niveau des Fahrzeugaufbaus aus einem innerhalb der Steuereinrichtung vorgegebenen Sollwertband herausfällt.

Bei abermaliger Abweichung der Istwerte von den geforderten Sollwerten wird das Verfahren mit einem der beschriebenen Regelungsschritte fortgesetzt. Entsprechen sowohl die Luftdrücke $p_T$, $p_N$ in den Luftfedern als auch das Niveau des Fahrzeugaufbaus den Sollwerten, so ist die Regelung beendet.

## Ansprüche

Verfahren zur Regelung einer druckluftgestützten Federung eines Fahrzeuges mit mehreren Hinterachsen, von denen mindestens eine Hinterachse als Treibachse und und mindestens eine weitere Hinterachse als nicht angetriebene Nachlaufachse dient,
mit zwischen der Treibachse und dem Fahrzeugaufbau angeordneten be- und entlüftbaren Luftfedern der Treibachse,
mit zwischen der Nachlaufachse und dem Fahrzeugaufbau angeordneten, be- und entlüftbaren Luftfedern der Nachlaufachse,
mit Druckmeßeinrichtungen zur Erfassung des Luftdrucks $p_T$ in den Luftfedern der Treibachse und des Luftdrucks $p_N$ in den Luftfedern der Nachlaufachse,
mit Niveaumeßeinrichtungen zur Erfassung des Niveaus des Fahrzeugaufbaus,

mit einer Steuereinrichtung zur Regelung der Luftdrücke $p_T$, $p_N$ durch Be- und Entlüftung der Luftfedern, welche über einen Speicher zur Speicherung von Sollwerten der Luftdrücke $p_T$, $p_N$ und des Niveaus des Fahrzeugaufbaues sowie über eine Vergleichseinrichtung zum Vergleich der Sollwerte mit Istwerten verfügt und welche mit den Druck- und Niveaumeßeinrichtungen sowie mit steuerbaren Ventilen über Signalein- und -ausgänge verbunden ist, wobei die Sollwerte der Luftdrücke $p_T$, $p_N$ so ausgelegt sind,

- daß bei einer geringen Beladung nahezu die gesamte Belastung von der Treibachse übernommen wird und der Luftdruck in den Luftfedern der Nachlaufachse bis auf einen Restdruck $p_{N\ min}$ entlastet ist,

- daß eine einen zulässigen Luftdruck $p_{T\ max}$ in den Luftfedern der Treibachse übersteigende zusätzliche Belastung von der Nachlaufachse übernommen wird,

- daß eine den zulässigen Luftdruck $p_{T\ max}$ in den Luftfedern der Treibachse und einen zulässiigen Luftdruck $p_{N\ max}$ in den Luftfedern der Nachlaufachse übersteigende zusätzliche Belastung von der Treibachse übernommen wird,

dadurch gekennzeichnet, daß, sofern nicht sowohl die Luftdrücke $p_T$, $p_N$ als auch das Niveau des Fahrzeugaufbaus den Sollwerten entspricht, einer der folgenden drei alternativen Verfahrensschritte durchgeführt wird:

a) entsprechen sowohl die Luftdrücke $p_T$, $p_N$ als auch das Niveau des Fahrzeugaufbaus nicht den Sollwerten, so wird

- für $p_N < p_{N\ min}$ und $p_T < p_{T\ max}$
bei Unterschreitung des Sollniveaus $p_N$ und bei Überschreitung des Sollniveaus $p_T$ geregelt, bis entweder $p_{N\ min}$ oder das Sollniveau erreicht ist,

- für $p_N < p_{N\ max}$ und $p_T > p_{T\ max}$
bei Unterschreitung des Sollniveaus $p_N$ und bei Überschreitung des Sollniveaus $p_T$ geregelt, bis entweder $p_{T\ max}$ oder das Sollniveau erreicht ist,

- für $p_N > p_{N\ min}$ und $p_T < p_{T\ max}$
bei Unterschreitung des Sollniveaus $p_T$ und bei Überschreitung des Sollniveaus $p_N$ geregelt, bis entweder $p_{T\ max}$ oder das Sollniveau erreicht ist,

- für $p_N > p_{N\ max}$ und $p_T > p_{T\ max}$
bei Unterschreitung des Sollniveaus $p_T$ und bei Überschreitung des Sollniveaus $p_N$ geregelt, bis entweder $p_{N\ max}$ oder das Sollniveau erreicht ist;

b) entsprechen die Luftdrücke $p_T$, $p_N$ den Sollwerten, jedoch das Niveau des Fahrzeugaufbaus nicht dem Sollwert, so wird $p_T$ geregelt bis $p_T$ aus einem vorgegebenen Sollwertbereich herausfällt;

c) entsprechen die Luftdrücke $p_T$, $p_N$ nicht den Sollwerten, jedoch das Niveau des Fahrzeugaufbaus dem Sollwert, so wird $p_N$ geregelt, bis das Niveau des Fahrzeugaufbaus aus einem vorgegebenen Sollwertband herausfällt.

FIG. 1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| X | EP-A-0 170 794 (WABCO)<br>* ganzes Dokument *<br>--- | 1 | B 62 D 61/12<br>B 60 G 17/04 |
| A | FR-A-2 115 201 (DAIMLER-BENZ)<br>* Figuren 4, 5 *<br>----- | 1 | |

**RECHERCHIERTE SACHGEBIETE (Int. Cl.3)**

B 62 D 61/00
B 60 G 17/00

Der vorliegende Recherchenbericht wurde für alle Patentansprüche erstellt

| Recherchenort | Abschlußdatum der Recherche | Prüfer |
|---|---|---|
| BERLIN | 23-09-1988 | KRIEGER P O |

EPO FORM 1503 03.82 (P0403)